# EUROPEAN PATENT SPECIFICATION

(11) **EP 3 521 755 B1**
(45) Date of publication and mention of the grant of the patent: **07.04.2021**
(21) Application number: 18155285.2
(22) Date of filing: 06.02.2018
(51) Int. Cl.: G01C 21/32, G01C 21/00, G06F 16/29

(54) **COMPUTER-AIDED PROCESSING OF POSITIONAL INFORMATION OF MEASUREMENT DATA**
COMPUTERGESTÜTZTE VERARBEITUNG VON POSITIONSINFORMATIONEN VON MESSDATEN
TRAITEMENT ASSISTÉ PAR ORDINATEUR D'INFORMATIONS DE POSITION DE DONNÉES DE MESURE

(43) Date of publication of application: 07.08.2019
(73) Proprietor: Siemens Aktiengesellschaft, 80333 München (DE)
(72) Inventor: LALIC, Marko, Seattle, WA 98104 (US); MLYNEK, Jonas, 10965 Berlin (DE); OELKE, Daniela, 85521 Riemerling (DE)

(56) References cited:
- EP-A1- 1 826 577
- US-A1- 2014 317 124
- US-A1- 2016 203 163

## Description

The application is related to a method and an apparatus for computer-aided processing of positional information of measurement data when being displayed on a map.

In an industrial environment, sensors, meters or other measuring devices collect a large amount of information about a system, resulting in datasets of several million data points. When no dedicated sensors are available, e.g., smart meter data can provide a qualitative insight into a system status. It is often preferred to display the measurement data in an intuitive way, for example it is useful for an utility operator monitoring a power network to visualize the system state of the power grid. The visualization provides an operator with the possibility to evaluate specific situations in the power network in an easy and intuitive way. Preferably, the visualization of measurement data is combined with a geographical map in order to easily localize specific features, such as failures or discrepancies of the system.

Geographical maps are commonly provided as map tiles of the world map depending on a specific zoom-level. The map tiles are typically displayed as two-dimensional maps with a specific map size and for a given coordinate projection. The world map is typically split into map tiles for every zoom-level, such that the map tiles are arranged in a grid of map tiles.

From US2014/317124A1 a method for providing a unified extensible platform for overall probe data and storage is known, wherein the platform contains all the probe data available and provides a unified framework for probe data accessing and processing. From US2016/203163A1 a method for capturing data pertaining to user activities on interactive web maps is known.

For a visual inspection of a large dataset on a map it is desirable to be able to make selection cuts based on selection criteria and to dynamically, i.e. in real time, display the selected data. The term "real time" means that the user does not experience any delay while performing the filtering and displaying. However, every new selection of a subset of the dataset requires newly rendering the visualization of the map and the data points, i.e. performing a computationally intensive operation involving trigonometric operations, which causes high computational load. In particular large datasets with many selection parameters cannot be easily explored in real time.

A usual method of pre-rendering the visualization on a map for every set of selected parameters and for every possible map tile is infeasible for large datasets comprising a large number of parameters. Commonly known multi-dimensional data cubes can store the data already aggregated across every possible set of dimension. For large dimensions, however, the size of a multi-dimensional dataset would exceed modern computer main memory.

It is therefore the object of the present application to propose a method and a system to speed up the computations for determining the spatial distribution of a large dataset on a map.

The object is solved by the features of the independent claims. The dependent claims contain further developments of the invention.

According to a first aspect of the present invention the object is solved by a method for computer-aided processing of positional information of measurement data, comprising the steps of:
- providing measurement data in a first table by means of an input unit, whereby the first table comprises measurement data coordinates, which are defined in a two-dimensional coordinate system, and an identifier for each measurement data point,
- providing a two-dimensional map tile of a map by means of an input unit, whereby the map tile comprises a fixed number of pixels, which represent a two-dimensional coordinate range at a given zoom-level and for a given coordinate projection,
- whereby a pixel identification number is assigned to each pixel of the map tile, and
- whereby a tile identification number is assigned to the map tile, and
- each position in the map tile is defined by two-dimensional coordinates in the two-dimensional coordinate system, thereby the two-dimensional coordinates are linked to a pixel identification number,

- determining the pixel identification numbers corresponding to measurement data coordinates which are within the two-dimensional coordinate range of the map tile by means of a determining unit,
- storing the identifier, the pixel identification number, the tile identification number, and the given zoom-level for each of the measurement data points, which are within the two-dimensional coordinate range of the map tile, in a second table by means of a storage unit,
   and
- localizing a position of a measurement data point on the map tile by means of a localization unit retrieving the pixel identification number from the second table.

The method allows a fast and less computationally expensive localization of measurement data points on a map, in particular of a selected subset of data points of a large dataset, due to pre-computing the locations of the measurement data points in pixel coordinates. The measurement data points are for example considered to be static, i.e. the values and/or the position of measurement data do not change within a time period shorter than the processing timescale. The method is favourable because the position in the map of each measurement data point is computed in pixel coordinates and stored in the second table for example in a computer memory by a storage unit. Therefore, this method comprises a transformation from two-dimensional measurement data coordinates to tile identification numbers and pixel identification numbers. The transformation is for example performed for a given zoom-level by a determining unit. The transformation particularly depends on the chosen coordinate projection of the map. A computer for example pre-computes the transformation and the result is stored in the second table in the computer memory. Hence, the localization unit retrieves the position of a measurement data point on a map tile by obtaining the pixel identification number from the second table instead of the two-dimensional measurement data coordinates from the first table that would involve a coordinate transformation step to map the data points onto the map. In other words, a storage unit stores the results of the transformation and projection depending on the zoom-level in the second table. The method is therefore favourable because pre-computing the transformation speeds up the localization of a measurement data point in the map.

The term "table" describes a data structure, like for example a table or chart, or a database structure which allows storing information and retrieving the information by querying the table. The table is for example stored in a storage unit and/or managed by a relational database management system. If stored in a database, the table can be queried by using the "Structured Query Language", also known as SQL.

The term "pixel" describes an image point or picture cell of a map or map tile. In particular, the number of pixels determines the resolution of the image or map. In other words, a pixel is the smallest entity or smallest element of an image or a map. An image or a map therefore comprises pixels in a grid. A pixel has for example a circle or a square shape. Each pixel is in particular described by a pixel identification number.

The coordinate projection is for example the Mercator projection. The coordinate projection of the map tile depends on the chosen projection of the map. The projection particularly influences how the two-dimensional coordinates are linked to a pixel identification number. In other words, the map projection together with the zoom-level defines the location of a data point on a grid of pixels

A map tile is for example a prepared image of a concrete section of the world. Each map tile is defined by the zoom-level and the tile identification number. The tile identification number results from the position of the map tile in a grid of tiles of the whole map. In other words, the map is for example divided into a grid of map tiles which are consecutively numbered.

In a preferred embodiment the method steps are performed for each zoom-level and for each map tile of the map.

The transformation is computed, for example by a processor, on every data point of the measurement dataset for each predefined zoom-level. In other words, the map is divided into map tiles for each zoom-level and the transformation is performed for each zoom-level and each map tile. Therefore, the dataset of measurement data points is duplicated as many times as the number of zoom-levels. The result of the transformation is positional information for every measurement data point in the map at each given zoom-level, whereby the position is defined by a pixel identification number and a tile identification number. Hence, no further computation, i.e. coordinate transformation, for mapping the measurement data points onto the map needs to be performed. The method is in particular favourable since a recalculation can independently be performed for each map tile, requiring less computing time than, e.g., a calculation for the whole map.

In a preferred embodiment of the method, the first table comprises at least one categorical coordinate for each of the measurement data points, whereby a categorical coordinate is provided by assigning a value of a predefined category to each data point.

A categorical coordinate can for example represent a time stamp indicating when the data point was collected, a rating number, or an overload number. A categorical coordinate particularly describes a property or a category of the measurement data point. The values of the categorical coordinates of the measurement data can in particular be different or the same for a number of measurement data points. By means of a categorical coordinate, a selection of a sample of measurement data points, e.g. by means of at least one time stamp, can be accelerated. In other words, the categorical coordinates can be used to make a selection to obtain a subset of the measurement data.

In a preferred embodiment of the method, the second table is pre-computed for every map tile of a given zoom-level and for a given coordinate projection.

The map tiles for example are prepared images representing a concrete section of the whole map. Therefore, the method for example relies on pre-computed images with a given coordinate projection onto which the measurement data points are mapped. The at least one second table is pre-computed such that the result of the transformation of two-dimensional coordinates of each of the measurement data points to pixel identification numbers for each map tile is stored in the second table and can directly be queried. Pre-computing the coordinate transformation, instead of performing the transformation on the fly, speeds up the localization of measurement data points in the map. In other words, the transformation of two-dimensional coordinates to pixel identification numbers for a large dataset speeds up the subsequent localization process, in particular when only a subset of the dataset is displayed and the selection of the subset changes. For each zoom-level, every measurement data point position on the map is pre-computed and the result of the computation is stored in the second table by a storage unit. In other words, the exact pixel is computed where the data point appears in the map for each zoom-level. Hence, for each zoom-level, every data point defined in the two-dimensional coordinate system is mapped into a coordinate system defined by the pixel identification number and the tile identification number. Therefore a fast localization of selected measurement data points is feasible.

In a preferred embodiment of the method, the method comprises further steps:
- selecting measurement data points from the first table by means of at least one categorical coordinate and providing the identifiers of the selected measurement data points,
- retrieving the pixel identification number and the tile identification number from the second table by means of the identifier of each selected measurement data point and a given zoom-level,
- computing a heatmap from the selected measurement data points using the pixel identification numbers thereof, and
- jointly displaying the at least one map tile, determined by means of the obtained tile identification number, and the heatmap.

The method is favourable as the displaying of a large number of measurement data points as a heatmap, for example on top of a map, can be processed in real time. The measurement data points to be displayed are selected from the first table by means of at least one categorical coordinate. It is for example possible to select all measurement data points from the first table. The necessary coordinate transformation is particularly pre-computed by for example a computational unit and the result is stored in the second table. A map is provided with a given coordinate projection and a zoom-level is chosen. The map is split into at least one map tile. The second table is for example retrieved by a retrieval unit from a storage medium or a database. The heatmap is in particular jointly displayed with the map by a display unit. The map tile and the heatmap are for example displayed on a screen of a computer, whereby in particular the pixels provide the resolution of the map and the number of pixels of the map tile is independent of the screen resolution.

Since the transformation of the two-dimensional coordinates of the measurement data points to pixel identification numbers and tile identification numbers is computed first for each zoom-level, the display of the heatmap requires merely querying the second table. The heatmap is computed based on the number or clustering of measurement data points in a particular pixel. Therefore, the display of the heatmap requires the position of a measurement data point in the map at a given zoom-level. The heatmap can for example be displayed by a display unit using a colour scheme which indicates the number density distribution or concentration of measurement data points.

In particular, only a subset of all measurement data is displayed. The subset is defined by the categorical coordinates which are for example selected by a selection unit. Hence, the method allows for the visualized set to change dynamically, for example based on the user's choice of categories or zoom-level or the chosen part of the map when navigating through the map.

In a preferred embodiment of the method, at least one second table is obtained for each given zoom-level.

It is advantageous to obtain at least one second table for each zoom-level to further speed up the localization and/or the display of the measurement data points on a map. It is conceivable that further sub-selection of the sample of measurement data points necessitates for example more than one second table per zoom-level. Thus, the positions of the measurement data points are stored in different second tables depending on the zoom-levels. The allocation into multiple second tables, e.g. at least one second table per zoom-level, improves the efficiency of queries, since every query focuses only one single zoom-level. Hence, filtering the measurement data points using a particular zoom-level is done by choosing the corresponding second table, directly providing the tile identification numbers and pixel identification numbers for localization at the chosen zoom-level.

In a preferred embodiment of the method, the map tile and the heatmap are jointly displayed when the selection of measurement data points and/or the map tile is altered.

By means of the selection of categorical coordinates, the selection of a sample of measurement data points is performed and the according identifiers of the selected measurement data points are provided. When for example a user selects a different set of measurement data points based on his/her selection of categorical coordinates and/or he/she chooses a different part of the map or map tile, the display of the map tile and heatmap can be altered in real time. The fast modification is enabled by means of querying the second table, e.g. stored in a computer memory, and retrieving the positional information of the measurement data points in the map.

In a preferred embodiment of the method, the second table further comprises copied entries from the first table.

In order to obtain additional information about the measurement data points, e.g. a time stamp, categorical coordinate entries are copied from the first table to the second table. The copy process can for example be performed by a computer. Therefore, the second table can comprise further information about the dataset, such that only one table needs to be queried from, e.g., a database.

According to another aspect of the present invention the object is solved by an apparatus for computer-aided processing of positional information of measurement data, comprising:
- an input unit configured to provide measurement data in a first table comprising measurement data coordinates, which are defined in a two-dimensional coordinate system, and an identifier for each measurement data point, and to provide a two-dimensional map tile of a map comprising a fixed number of pixels, which represent a two-dimensional coordinate range at a given zoom-level and for a given coordinate projection,
   - whereby a pixel identification number is assigned to each pixel of the map tile, and
   - whereby a tile identification number is assigned to the map tile, and
   - each position in the map tile is defined by two-dimensional coordinates in the two-dimensional coordinate system, thereby the two-dimensional coordinates are linked to a pixel identification number,
- a determining unit configured to determine the pixel identification numbers corresponding to the measurement data coordinates which are within the two-dimensional coordinate range of the map tile,
- a storage unit configured to store the identifier, the pixel identification number, the tile identification number, and the given zoom-level for each of the measurement data points, which are within the two-dimensional coordinate range of the map tile, in a second table,
- a localization unit configured to localize the position of a measurement data point on the map tile by retrieving the pixel identification number from the second table.

The apparatus enables fast and easy localization of measurement data points in a given map. The coordinate transformation to determine the positions in the map is computed first by the apparatus and the result is stored in the second table by the storage unit. Hence, for localization, the second table is queried and the position in the map is directly returned without further coordinate transformation.

In a preferred embodiment the apparatus comprises:
- a selection unit configured to select measurement data points from the first table by means of at least one categorical coordinate and to provide the identifiers of the selected measurement data points,
- a retrieval unit configured to retrieve the pixel identification number and the tile identification number from the second table by means of the identifier of each selected measurement data point and by means of a given zoom-level,
- a computational unit configured to compute a heatmap from the selected measurement data points using the pixel identification numbers thereof,
- a display unit configured to jointly display the at least one map tile, determined by means of the obtained tile identification number, and the heatmap.

The apparatus for example enables a fast and dynamical display of a heatmap of a large dataset together with a map for example on a computer screen. The apparatus enables preferably a real time exploration of large datasets comprising millions of measurement data points. In other words, the apparatus provides a fast computation of the location of measurement data points in a map which can help users to inspect a system status in real time.

In a preferred embodiment, the apparatus comprises means for carrying out the said method.

In a preferred embodiment the apparatus comprises a database configured to store the first table and/or the second table.

The database can particularly be part of the apparatus and/or be remotely located, e.g., in a cloud. The first table and/or the second table can be stored in the database to enable fast queries, e.g., using the Structured Query Language. The result of the coordinate transformation is stored in the second table which is for example configured as a data structure of the database.

The invention further comprises a computer program product directly loadable into the internal memory of a digital computer, comprising software code portions for performing the steps of the said method when said product is run on a computer.

The invention will be explained in more detail by reference to the accompanying figures.
- Fig. 1: shows a first flow chart illustrating the steps of a first example of the inventive method;
- Fig. 2: shows a second flow chart illustrating the steps of a second example of the inventive method;
- Fig. 3: shows a diagram to illustrate the transformation from two-dimensional coordinates to pixel identification numbers of the position of each measurement data point as well as the exemplary table formats of the first table and the second table;
- Fig. 4: shows a diagram of an application example as a graphical user interface of the inventive method;
- Fig. 5: shows a diagram of a first example of the inventive apparatus; and
- Fig. 6: shows a diagram of a second example of the inventive apparatus.

Equivalent parts in the figures are labeled with the same reference signs.

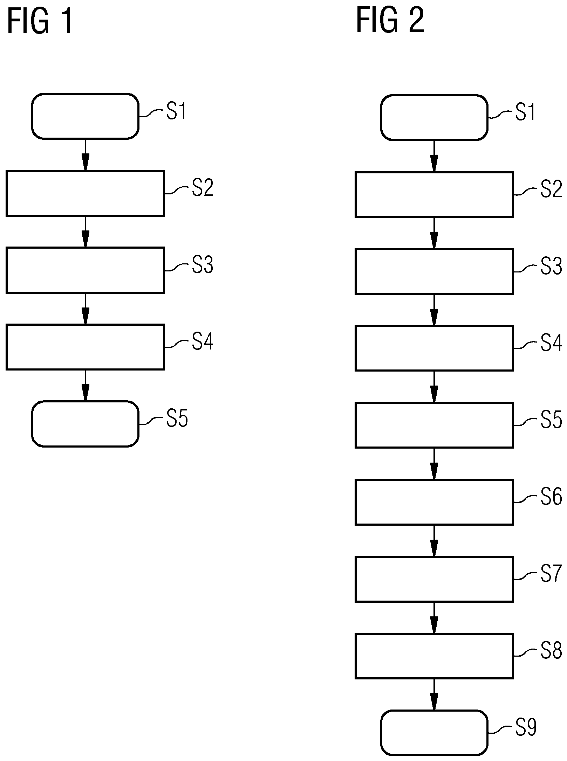

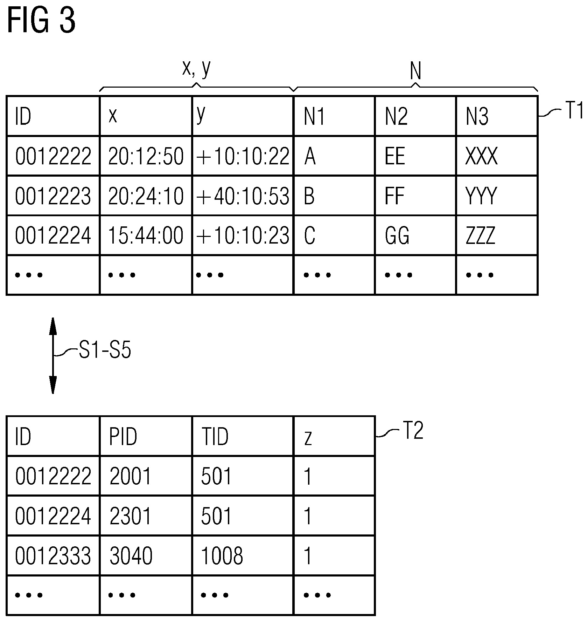

Figure 1 shows a flow chart to illustrate the individual steps of one example of the inventive method for computer-aided processing of positional information of measurement data. The measurement data are stored in a first table T1 as for example shown in Figure 3. The first table T1 is a data structure which can be processed by a computer.

In the first step S1 of the method, measurement data, e.g., from sensors or meters, are provided by an input unit. Meters or sensors therefore perform measurements of a system and the measurement data are provided. The measurement data are stored in a first table T1 comprising measurement data coordinates x and y, defining where the measurements have been taken and which are defined in a two-dimensional coordinate system, and an identifier ID. The identifier ID is for example a unique number characterizing an individual measurement data point, i.e., each data point has one unique identifier ID. The two-dimensional coordinates x and y are defined in a spatial coordinate system, e.g. in longitude and latitude. The first table T1 can further comprise at least one categorical coordinate N. The identifier ID is for example linked to a categorical coordinate N. Categorical coordinates N can comprise time stamps or further parameters or properties defining a system state or measurement result or additional information about the measurements.

The second step S2 of the method involves providing a two-dimensional map tile of a map by the input unit. For example the world map can be subdivided into map tiles, each having the same size in pixels, or an image is divided into tiles. The map tile comprises a fixed number of pixels, hence, defining the resolution of the map. The fixed pixel number of each map tile represent a two-dimensional coordinate range at a given zoom-level z and a given coordinate projection of the map. In other words, depending on a given zoom-level z and coordinate projection, the fixed number of pixels of a map tile correspond to a different two-dimensional coordinate range.

Each pixel of the map tile is assigned a pixel identification number PID. The pixel identification numbers PID are unambiguous for a given map tile; therefore a position in a specific map tile can be identified using the pixel identification numbers PID. The map tile is assigned a tile identification number TID which depends on the zoom-level z. The tile identification number TID is unambiguous and identifies a specific map tile of a map. Thus, a map, or similarly an image, can be subdivided into map tiles, whereby each map tile is assigned a tile identification number TID, which depends on the zoom-level z. Each map tile can be subdivided into further map tiles at higher zoom-levels z. The map tiles can for example be equally sized.

Each position in a map at a given zoom-level is therefore defined by a coordinate system spanned by the tile identification numbers TID and pixel identification numbers PID. In addition each position in the map tile is defined by two-dimensional coordinates, preferably defined in the same two-dimensional coordinate system as used for characterizing the measurement data. Each position in the map tile therefore falls onto a pixel, hence, each two-dimensional coordinate pair corresponds to one pixel, which is identified by a pixel identification number PID. One pixel can be linked to several two-dimensional coordinates, depending on the coordinate grid resolution. This relation is defined by a transformation from two-dimensional coordinates to pixel identification numbers PID and tile identification numbers TID. Therefore the method describes a coordinate transformation.

In step S3 of the method the determining unit determines all pixel identification numbers PID which correspond to the measurement data coordinates within the two-dimensional coordinate range of the map tile. Therefore, only the measurement data points are considered whose measurement data coordinates x and y are within the coordinate range of the considered map tile. This step S3 involves a coordinate transformation from two-dimensional coordinates of the measurement data to pixel identification numbers PID and tile identification number TID of the according map tile. The transformation depends on the given coordinate projection and the zoom-level z.

The next step S4 of the method involves storing the identifier ID, the pixel identification number PID, the tile identification number TID and the given zoom-level z for each of the measurement data points, which are within the two-dimensional coordinate range of the map tile, in a second table T2. The second table is a data structure which is for example stored in a database by a storage unit. In other words, for all measurement data points, whose positions are within the coordinate range of the map tile, the identifiers ID, the pixel identification number PID, the tile identification number TID and the given zoom-level z are pre-computed and stored in a second table T2. The position of each measurement data point in a map is hence unambiguously defined by the pixel identification number PID and the tile identification number TID, while, the tile identification number TID is linked to the zoom-level z.

The step S4 thus results in at least one second table T2, comprising the information required to easily and fast localize a measurement data point in the map and stored in a computer memory, cache or database.

In the next step S5 of the method the position in the map tile of a measurement data point is determined by a localization unit which retrieves the pixel identification numbers PID from the second table T2 from a computer memory, cache or database. In other words, in order to localize a measurement data point in a map at a specific zoom-level z, a database can be queried and a tile identification number TID and pixel identification number PID is retrieved from the second table T2. The query of a database is faster than the computation of the coordinate transformation on the fly.

The zoom-level z provides a first constraint which can be used to filter the second table T2. No further coordinate transformation is required for mapping the measurement data points onto a map. The position of a measurement data point in the map at a zoom-level z can easily be retrieved by querying the second table T2, returning the pixel identification number PID and tile identification number TID. Preferably, at least one second table T2 per zoom-level z is obtained, such that the query speed can be further improved.

The described method can be performed for each available zoom-level z. Thus, the measurement data points are mapped onto map tiles for each zoom-level z. In other words, the transformation to pixel identification numbers PID and tile identification numbers TID to characterize the location of the measurement data is performed for each zoom-level z. Each map tile and according entries of the second table T2 are pre-computed and stored on a computer memory or database. In order to retrieve the position of a measurement data point in a map at a chosen zoom-level z, the second table T2 provides the necessary information. The pre-computing for all map tiles at each zoom-level z can be performed for the whole measurement data set. Particularly for a large measurement data set of millions of data points this method is suitable for real time applications, such as fast visualization and/or analysis of the measurement data point positions. The method speeds up the localization of measurement data points when the selection of measurement data points is altered.

Figure 2 shows a second example of the disclosed method displayed as flow-chart. The first steps S1 to S5 are equivalent to the steps shown in Figure 1.

In step S6 measurement data points are selected from the first table T1 by means of the selection of at least one categorical coordinate N. For example one of the categorical coordinates is a time stamp, such that measurement data can be selected based on a time stamp or range. A user can select a subsample of the measurement data points based on specific categorical coordinates by using a selection unit. By selecting measurement data points from the first table T1, one retrieves the identifier ID for each selected measurement data point. These measurement data points shall be displayed on a map with a particular coordinate projection and zoom-level z. Therefore, their position in the map needs to be determined by computing their projected positions at a given zoom-level z, i.e., a coordinate transformation is required. This computational step is enhanced by the disclosed method since the coordinate transformation and projection is pre-computed, as described above, such that the positional information for each measurement data point can be retrieved from the second table T2 in a database. No on-the-fly coordinate transformation is required.

In step S7 the pixel identification numbers PID and the tile identification numbers TID from the second table T2 are retrieved for each selected measurement data point by means of the identifier ID and by means of a given zoom-level z. In particular, this step is performed for a given zoom-level z, i.e. a user for example determines first a zoom-level z at which the map and data shall be displayed. By choosing a particular zoom-level z, a first selection is made, since some measurement data points can be located outside of the zoomed-in region of the map. In other words, the chosen zoom-level z and the identifier ID of a measurement data point are unambiguously linked to the according pixel identification number PID and the tile identification number TID through the aforementioned method steps. When choosing a zoom-level z and selecting particular data points by means of the categorical coordinates in the first table T1, a query to the second table T2 returns the corresponding map tile and pixel position therein. In order to display the measurement data points in a map, i.e., obtaining the positions in the map, the query to the second table T2 is faster than querying the first table T1, because it involves no further coordinate transformation. Depending on the selected measurement data points and the chosen zoom-level z, particular map tiles are selected. It is also conceivable that map tiles are predefined, e.g. by a user. An input unit provides the measurement data points and/or the map tiles.

In step S8 a heatmap is computed from the selected measurement data points using the pixel identification numbers PID thereof. A heatmap is computed based on the two-dimensional areal number density or clustering of measurement data points, whereby the positions of the measurement data points are indicated by the pixel identification numbers PID. Therefore, the computation of a heatmap requires the position of measurement data points in a map which is queried from the second table T2 in a computer memory or database.

A heatmap can for example be displayed using a color scheme and for example a weighting scheme. A heatmap typically is an intuitive visualization to display frequencies of occurrence. For example the measurement data points are obtained by smart meters in an energy network. The heatmap can therefore display the frequency of overloaded transformers or circuit sections on the network.

In step S9 the heatmap and the map tile, which is determined by means of the obtained tile identification number TID, are jointly displayed. For example the heatmap is overlaid on top of the map tile or the according pixels in the map tile are colored or the heatmap is displayed next to the map. Therefore, the combined geographical and dispersion information of the map and the heatmap, respectively, provide a useful display of the measurement data.

When changing the selection of measurement data points, e.g., by choosing different categorical coordinate values, the heatmap can be altered and displayed in real time, since no computationally expensive coordinate transformation and projection needs to be performed. The coordinate transformation is pre-computed and stored according to the described method. Hence, a change in the selection of measurement data and/or the map tile, merely requires a new query to the database or computer memory to obtain new values from the second table T2.

A different selection of measurement data points by means of the first table T1 results in a different sample of identifiers ID of the selected measurement data points. The identifiers ID are used to query the second table T2. Depending on the chosen zoom-level z, the according map tile identification numbers and pixel identification numbers are retrieved from the second table T2. Hence, the chosen zoom-level z can be used to obtain a first selection of the data stored in the second table T2.

The second table T2, or several second tables T2 for each zoom-level z, and/or the first table T1 can be stored in a database. Therefore, using for example the structured query language, also known as SQL, the positional information of a measurement data point in a map can be quickly retrieved by querying the second table T2. Ideally for each considered map and for each zoom-level z, i.e., for each map tile, and for a given coordinate projection, at least one second table T2 is stored in the database. When a newly selected subsample of measurement data points shall be displayed as a heatmap, all relevant information can be easily retrieved from the second table T2 in the database.

It is conceivable that instead of a geographical map an image or picture or illustration is used, wherein certain areas are overlaid by the heatmap. For example, using medical images of the human body, the described method can be applied to overlay the image with a heatmap, presenting a specific status of the pictured part.

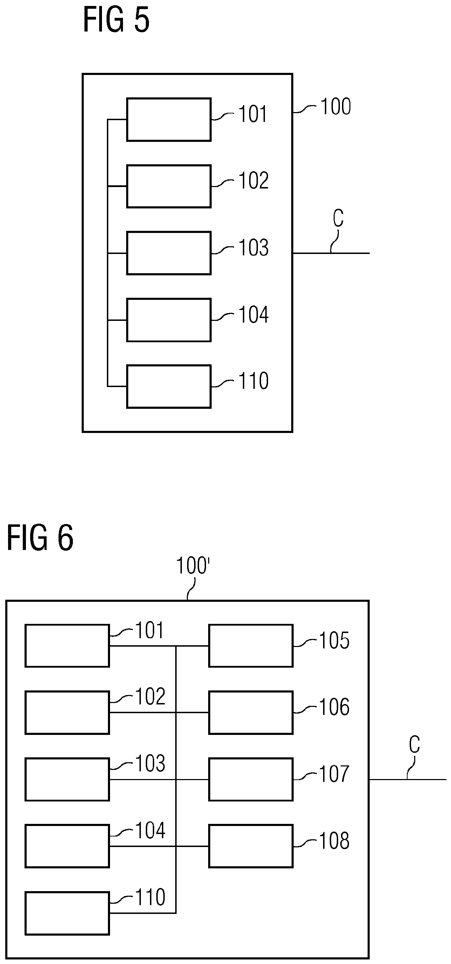

Figure 3 shows a diagram to illustrate the transformation from two-dimensional coordinates to pixel identification numbers of the position of each measurement data point performed by the apparatus shown in Figures 5 and 6. Examples of a first table T1 and the second table T2 are shown. The tables can be tables or charts as depicted or data/database structures or any other structures which allow querying information stored therein.

The first table T1 comprises information about measurement data, such as identifiers ID, two-dimensional coordinates x and y, and categorical coordinates N. One of the categorical coordinates N1, N2 or N3 can be one or more time stamps. The second table T2 comprises for example of a column containing the identifiers ID of the measurement data points, the pixel identification numbers PID, the tile identification numbers TID and the zoom-level z. The chosen zoom-level z can also be stored in a different way. In particular the chosen zoom-level z can be provided separately, e.g., as part of the filename of the second table T2. The value of the zoom-level z provides a first filter criterion to select a subset of measurement data from the second table T2.

The described method yields a transformation from two-dimensional measurement data coordinates x,y to a coordinate system defined by the tile identification number TID and the pixel identification number PID, which unambiguously define the position of a measurement data point in a map at a given zoom-level z and for a given coordinate projection. The transformation according to the method, as e.g., illustrated in Figure 1 or Figure 2, is shown as an arrow in Figure 3. Each measurement data point is uniquely identified by an identifier ID, which is copied from the first table T1 to the second table T2. Therefore, when selecting a subset of measurement data points in the first table T1, the identifiers ID are used to find the according pixel identification number PID and tile identification number TID, for a chosen zoom-level z. Preferably the second table T2 is cut by using the zoom-level z or, instead, the second table T2 can only comprise information about the position of measurement data points for one zoom-level z. In that case, at least one second table T2 for each zoom-level z is provided. Furthermore, the at least one second table T2 can comprise additional columns (not shown), such as copied entries from the first table T1. For example, the second table T2 can comprise a copy of one column N1 of the categorical coordinates N, such that only one table is required for obtaining positional and additional information about the dataset. The first table T1 and/or the second table T2 are stored on a computer memory, cache or database in order to enable fast queries.

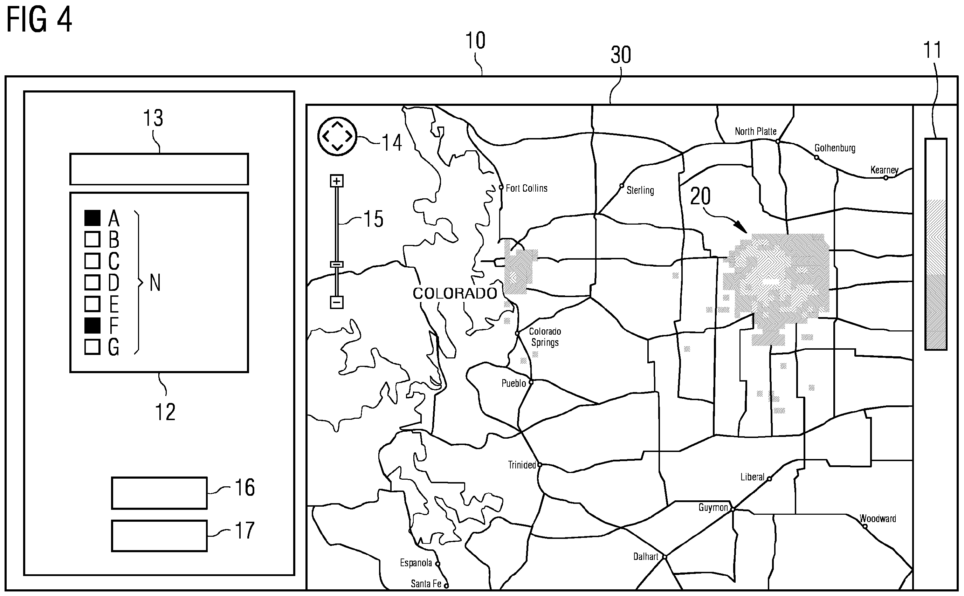

Figure 4 shows a diagram of an application example of the described method. It shows a visualization tool 10 as a graphical user interface for a computer for displaying a map section 30 at specific zoom-level z. The visualization can for example be displayed on a screen of a computer. The map is for example a geographical map. Positions in the map are defined by a two-dimensional coordinate system. Therefore the elements 10 to 17 and 30 show a graphical user interface to jointly display at least one or more map tiles and a heatmap 20 of measurement data points in real time. The computation for the shown graphical user interface is performed on a processor, providing the required position information which is stored in at least one second table T2 in a database. Hence, the graphical user interface makes use of the fast query of the database.

With a zoom-slider 15 the zoom-level of the map can be selected and changed, such that different section of the map can be displayed. Thus, a user can select a zoom-level by adjusting the zoom-slider 15. Furthermore the map section can be changed, for example along the axes of the two-dimensional coordinate system, i.e., another map tile or further map tiles can be selected, by using the control button 14. The user can select a particular set of measurement data to be displayed by using the selection menu 12 to select categorical coordinates N and then pressing the selection button 13. The user makes a selection based on the categorical coordinates N, shown as selectable items A to G. A selection depends also on the zoom-level z, as it defines the coordinate range to be displayed. This selection is forwarded to a selection unit which is configured to provide a selection of measurement data points. Thus, depending on the selection criteria, a subset of the measurement dataset is retrieved from the first table T1 and the corresponding identifiers ID are provided by the selection unit. By means of the identifiers ID and the zoom-level z, a retrieval unit provides the according pixel identification numbers PID and tile identification numbers TID of the selected measurement data points from the second table T2.

In other words, the selection of measurement data points by means of the categorical coordinates N is performed using the first table T1 providing the identifiers ID of the selected measurement data. Based on the identifiers ID and the chosen zoom-level z, the query towards the second table T2 returns the according map tile identification numbers TID and the pixel identification numbers PID.

The selected measurement data points are displayed as a heatmap 20 on top of the underlying map 30 after computing the heatmap by the computing unit. The underlying map 30 comprises at least one map tile, which is provided by means of the tile identification numbers TID of the selected measurement data points.

The heatmap shows for example part of a geographic map of the world with coloured regions according to a colour scale 11, shown as different shaded sections, whereby the colour or colour intensity is defined by the number density of measurement data points per pixel.

When the selection of measurement data points is changed by a user, the heatmap 20 is re-generated and displayed in real time. Therefore, the second table T2 is queried and the required tile identification numbers TID and pixel identification numbers PID are determined in order to display the newly selected sample of measurement data. Also a change in zoom-level z using the zoom-slider 15 or shifting the map tile using the control button 14 to display different sections of the map will change the display of the heatmap 20. When shifting the map to navigate to other regions, other regions of the map are displayed while the selection of measurement data points can remain the same but the displayed heatmap is altered in real time. According to the described method, a coordinate transformation is not required in these cases, as the second table T2 already comprises the positional information which is required to display a new heatmap 20, speeding up the processing time.

If one categorical coordinate is a time stamp a selection based on a time period can be made. It is conceivable that a user prefers to display measurement data as a heatmap for subsequent time periods such that with button 17 a time series of heatmaps can be displayed, i.e., a newly generated heatmap is displayed after a defined time period. The display is performed without an interfering time delay.

Figure 5 shows a diagram of a first embodiment of the inventive apparatus 100 for computer-aided processing of positional information of measurement data. The apparatus comprises an input unit 101, a determining unit 102, a storage unit 103, and a localization unit 104. Furthermore, the apparatus 100 can comprise a processor 110 to carry out and support the computing of the method steps. All units of the apparatus 100 are preferably connected with each other. The apparatus 100 can comprise a communication interface C to be connected to a computer or other electronic device.

The input unit 101 is configured to provide measurement data in a first table T1 and to provide at least one two-dimensional map tile of a map. A coordinate transformation rule according to the described method yields the relation between the two-dimensional coordinates in the map tile and the pixel identification numbers PID of the map tile.

The determining unit 102 is configured to determine the pixel identification numbers PID which correspond to the measurement data coordinates x and y if the coordinates are within the coordinate range of the map tile. The determining unit 102 therefore provides the subsample of the measurement data points which are within the two-dimensional coordinate range of the map tile and determine the coordinate transformation according to the aforementioned relation.

The storage unit 103 is configured to store the identifier ID, the pixel identification number PID, the tile identification number TID, the given zoom-level z for each of the measurement data points in a second table T2. The storage unit 103 can also store additional information about the measurement data in the second table T2, as for example a copy of at least part of the categorical coordinate columns from the first table T1. Furthermore the storage unit 103 can store more than one second table T2, e.g., a second table T2 for each zoom-level z. The storage unit 103 stores the second table T2 for example in the computer memory, cache or on a database.

A processor 110 performs the pre-computing of the coordinate transformation onto the map. This pre-computation is performed for every zoom-level z.

The localization unit 104 is configured to determine the position of a measurement data point in the map by retrieving the tile identification number TID and pixel identification number PID from the second table T2.

The apparatus 100 can also comprise a database or can be connected to a database. The first table T1 and/or the second table T2 can be stored in the database or in the cache of a processor in order to perform fast queries.

Figure 6 shows a diagram of a second embodiment of the inventive apparatus 100'. The apparatus 100' comprises the same units as shown in Figure 5, as well as a selection unit 105, a retrieval unit 106, a computational unit 107, and a display unit 108. The display unit 108 is for example a computer screen which displays the graphical user interface as shown in Figure 4.

The selection unit 105 is configured to select measurement data points from the first table T1 by means of the categorical coordinates N. The selection unit 105 selects a subsample of the measurement data and provides the identifiers ID of the selected measurement data points.

The retrieval unit 106 is configured to retrieve the pixel identification number PID and the tile identification number TID from the second table T2 by means of the identifiers ID of the selected measurement data points and by means of a chosen zoom-level z.

The computational unit 107 is configured to compute a heatmap from the selected measurement data points using the pixel identification numbers PID, i.e. the positional information is defined in pixel coordinates.

The display unit 108 is configured to jointly display the map tile and the heatmap. For example the display unit 108 can show the map tile overlaid with a coloured heatmap as shown in Figure 4.

Furthermore the apparatus 100' can comprise or is connected to a database. The first table T1 and/or the second table T2 can be stored in the database in order to perform fast queries.

## Claims

1. Method for computer-aided processing of positional information of measurement data, comprising the steps:
- providing (S1) measurement data in a first table (T1) by means of an input unit, whereby the first table (T1) comprises measurement data coordinates (x,y), which are defined in a two-dimensional coordinate system, and an identifier (ID) for each measurement data point,
- providing (S2) a two-dimensional map tile of a map by means of an input unit, whereby the map tile comprises a fixed number of pixels, which represent a two-dimensional coordinate range at a given zoom-level (z) and for a given coordinate projection,
- whereby a pixel identification number (PID) is assigned to each pixel of the map tile, and
- whereby a tile identification number (TID) is assigned to the map tile, and
- each position in the map tile is defined by two-dimensional coordinates (x,y) in the two-dimensional coordinate system, thereby the two-dimensional coordinates are linked to a pixel identification number (PID),
- determining (S3) the pixel identification numbers (PID) corresponding to the measurement data coordinates (x,y) which are within the two-dimensional coordinate range of the map tile by means of a determining unit,
- storing (S4) the identifier (ID), the pixel identification number (PID), the tile identification number (TID), and the given zoom-level (z) for each of the measurement data points, which are within the two-dimensional coordinate range of the map tile, in a second table (T2) by means of a storage unit, and
- localizing a position of a measurement data point on the map tile by means of a localization unit retrieving (S5) the pixel identification number (PID) from the second table (T2).

2. Method according to claim 1, whereby the method steps are performed for each zoom-level (z) and for each map tile of the map.

3. Method according to one of the preceding claims, whereby the first table (T1) comprises at least one categorical coordinate (N) for each of the measurement data points, whereby a categorical coordinate (N) is provided by assigning a value of a predefined category to each data point.

4. Method according to one of the preceding claims, whereby the second table (T2) is pre-computed for every map tile of a given zoom-level (z) and for a given coordinate projection.

5. Method according to one of the preceding claims, whereby the method comprises further steps:
- selecting (S6) measurement data points from the first table (T1) by means of at least one categorical coordinate (N) and providing the identifiers (ID) of the selected measurement data points,
- retrieving (S7) the pixel identification number (PID) and the tile identification number (TID) from the second table (T2) by means of the identifier (ID) of each selected measurement data point and a given zoom-level (z),
- computing (S8) a heatmap from the selected measurement data points using the pixel identification numbers (PID) thereof, and
- jointly displaying (S9) the at least one map tile, determined by means of the obtained tile identification number (TID), and the heatmap.

6. Method according to one of the preceding claims, whereby at least one second table (T2) is obtained for each given zoom-level (z).

7. Method according to claim 5, whereby the map tile and the heatmap are jointly displayed when the selection of measurement data points and/or the map tile is altered.

8. Method according to one of the preceding claims, whereby the second table (T2) further comprises copied entries from the first table (T1).

9. Apparatus for computer-aided processing of positional information of measurement data, comprising:
- an input unit (101) configured to provide measurement data in a first table (T1) comprising measurement data coordinates (x,y), which are defined in a two-dimensional coordinate system, and an identifier (ID) for each measurement data point, and to provide a two-dimensional map tile of a map comprising a fixed number of pixels, which represent a two-dimensional coordinate range at a given zoom-level (z) and for a given coordinate projection,
- whereby a pixel identification number (PID) is assigned to each pixel of the map tile, and
- whereby a tile identification number (TID) is assigned to the map tile, and
- each position in the map tile is defined by two-dimensional coordinates in the two-dimensional coordinate system, thereby the two-dimensional coordinates are linked to a pixel identification number (PID),
- a determining unit (102) configured to determine the pixel identification numbers (PID) corresponding to the measurement data coordinates (x,y) which are within the two-dimensional coordinate range of the map tile,
- a storage unit (103) configured to store the identifier (ID), the pixel identification number (PID), the tile identification number (TID), and the given zoom-level (z) for each of the measurement data points, which are within the two-dimensional coordinate range of the map tile, in a second table (T2),
- a localization unit (104) configured to localize the position of a measurement data point on the map tile by retrieving (S6) the pixel identification number (PID) from the second table (T2).

10. Apparatus according to claim 9, comprising:
- a selection unit (105) configured to select measurement data points from the first table (T1) by means of at least one categorical coordinate (N) and to provide the identifiers (ID) of the selected measurement data points,
- a retrieval unit (106) configured to retrieve the pixel identification number (PID) and the tile identification number (TID) from the second table (T2) by means of the identifier (ID) of each selected measurement data point and by means of a given zoom-level (z),
- a computational unit (107) configured to compute a heatmap from the selected measurement data points using the pixel identification numbers (PID) thereof,
- a display unit (108) configured to jointly display the at least one map tile, determined by means of the obtained tile identification number (TID), and the heatmap.

11. Apparatus according to the claims 9 and 10, comprising means for carrying out the method according to the claims 2 to 4 and 6 to 8.

12. Apparatus according to one of the claims 9 to 11 comprising a database configured to store the first table (T1) and/or the second table (T2).

13. A computer program product directly loadable into the internal memory of a digital computer, comprising software code portions for performing the steps of one of the claims 1 to 8 when said product is run on a computer.

## Patentansprüche

1. Verfahren zur computergestützten Verarbeitung von Positionsinformationen von Messdaten, das folgende Schritte umfasst:
- Bereitstellen (S1) von Messdaten in einer ersten Tabelle (T1) mithilfe einer Eingabeeinheit, wobei die erste Tabelle (T1) Messdatenkoordinaten (x,y), die in einem zweidimensionalen Koordinatensystem definiert sind, und eine Kennung (ID) für jeden Messdatenpunkt umfasst,
- Bereitstellen (S2) einer zweidimensionalen Kartenkachel einer Karte mithilfe einer Eingabeeinheit, wobei die Kartenkachel eine feste Anzahl von Pixeln umfasst, die einen zweidimensionalen Koordinatenbereich bei einer gegebenen Zoom-Stufe (z) und für eine gegebene Koordinatenprojektion darstellen,
- wobei jedem Pixel der Kartenkachel eine Pixel-Identifikationsnummer (PID) zugewiesen ist und
- wobei der Kartenkachel eine Kachel-Identifikationsnummer (TID) zugewiesen ist und
- jede Position in der Kartenkachel durch zweidimensionale Koordinaten (x,y) in dem zweidimensionalen Koordinatensystem definiert ist, wodurch die zweidimensionalen Koordinaten mit einer Pixel-Identifikationsnummer (PID) verknüpft sind,
- Bestimmen (S3) der Pixel-Identifikationsnummern (PID), die den Messdatenkoordinaten (x,y) entsprechen, die sich innerhalb des zweidimensionalen Koordinatenbereichs der Kartenkachel befinden, mithilfe einer Bestimmungseinheit,
- Speichern (S4) der Kennung (ID), der Pixel-Identifikationsnummer (PID), der Kachel-Identifikationsnummer (TID) und der gegebenen Zoom-Stufe (z) für jeden der Messdatenpunkte, die sich innerhalb des zweidimensionalen Koordinatenbereichs der Kartenkachel befinden, in einer zweiten Tabelle (T2) mithilfe einer Speichereinheit und
- Lokalisieren einer Position eines Messdatenpunkts auf der Kartenkachel mithilfe einer Lokalisierungseinheit, die die Pixel-Identifikationsnummer (PID) aus der zweiten Tabelle (T2) abruft (S5).

2. Verfahren nach Anspruch 1, wobei die Verfahrensschritte für jede Zoom-Stufe (z) und für jede Kartenkachel durchgeführt werden.

3. Verfahren nach einem der vorhergehenden Ansprüche, wobei die erste Tabelle (T1) mindestens eine kategorische Koordinate (N) für jeden der Messdatenpunkte umfasst, wobei eine kategorische Koordinate (N) durch Zuweisen eines Werts einer vordefinierten Kategorie zu jedem Datenpunkt bereitgestellt wird.

4. Verfahren nach einem der vorhergehenden Ansprüche, wobei die zweite Tabelle (T2) für jede Kartenkachel einer gegebenen Zoom-Stufe (z) und für eine gegebene Koordinatenprojektion vorberechnet wird.

5. Verfahren nach einem der vorhergehenden Ansprüche, wobei das Verfahren weitere Schritte umfasst:
- Auswählen (S6) von Messdatenpunkten aus der ersten Tabelle (T1) mithilfe mindestens einer kategorischen Koordinate (N) und Bereitstellen der Kennungen (ID) der ausgewählten Messdatenpunkte,
- Abrufen (S7) der Pixel-Identifikationsnummer (PID) und der Kachel-Identifikationsnummer (TID) aus der zweiten Tabelle (T2) mithilfe der Kennung (ID) jedes ausgewählten Messdatenpunkts und einer gegebenen Zoom-Stufe (z),
- Berechnen (S8) einer Heatmap aus den ausgewählten Messdatenpunkten unter Verwendung der Pixel-Identifikationsnummern (PID) davon und
- gemeinsames Anzeigen (S9) der mithilfe der erhaltenen Kachel-Identifikationsnummer (TID) bestimmten mindestens einen Kartenkachel und der Heatmap.

6. Verfahren nach einem der vorhergehenden Ansprüche, wobei man für jede gegebene Zoom-Stufe (z) mindestens eine zweite Tabelle (T2) erhält.

7. Verfahren nach Anspruch 5, wobei die Kartenkachel und die Heatmap gemeinsam angezeigt werden, wenn die Auswahl von Messdatenpunkten und/oder die Kartenkachel geändert wird.

8. Verfahren nach einem der vorhergehenden Ansprüche, wobei die zweite Tabelle (T2) ferner kopierte Einträge aus der ersten Tabelle (T1) umfasst.

9. Vorrichtung zur computergestützten Verarbeitung von Positionsinformationen von Messdaten, die Folgendes umfasst:
- eine Eingabeeinheit (101), die dazu konfiguriert ist, Messdaten in einer ersten Tabelle (T1) bereitzustellen, die Messdatenkoordinaten (x,y), die in einem zweidimensionalen Koordinatensystem definiert sind, und eine Kennung (ID) für jeden Messdatenpunkt umfasst, und eine zweidimensionale Kartenkachel einer Karte bereitzustellen, eine feste Anzahl von Pixeln umfasst, die einen zweidimensionalen Koordinatenbereich bei einer gegebenen Zoom-Stufe (z) und für eine gegebene Koordinatenprojektion darstellen,
- wobei jedem Pixel der Kartenkachel eine Pixel-Identifikationsnummer (PID) zugewiesen ist und
- wobei der Kartenkachel eine Kachel-Identifikationsnummer (TID) zugewiesen ist und
- jede Position in der Kartenkachel durch zweidimensionale Koordinaten (x,y) in dem zweidimensionalen Koordinatensystem definiert ist, wodurch die zweidimensionalen Koordinaten mit einer Pixel-Identifikationsnummer (PID) verknüpft sind,
- eine Bestimmungseinheit (102), die dazu konfiguriert ist, die Pixel-Identifikationsnummern (PID), die den Messdatenkoordinaten (x,y) entsprechen, die sich innerhalb des zweidimensionalen Koordinatenbereichs der Kartenkachel befinden, zu bestimmen,
- eine Speichereinheit (103), die dazu konfiguriert ist, die Kennung (ID), die Pixel-Identifikationsnummer (PID), die Kachel-Identifikationsnummer (TID) und die gegebene Zoom-Stufe (z) für jeden der Messdatenpunkte, die sich innerhalb des zweidimensionalen Koordinatenbereichs der Kartenkachel befinden, in einer zweiten Tabelle (T2) zu speichern,
- eine Lokalisierungseinheit (104), die dazu konfiguriert ist, die Position eines Messdatenpunkts auf der Kartenkachel durch Abrufen (S6) der Pixel-Identifikationsnummer (PID) aus der zweiten Tabelle (T2) zu lokalisieren.

10. Vorrichtung nach Anspruch 9, die Folgendes umfasst:
- eine Auswahleinheit (105), die dazu konfiguriert ist, Messdatenpunkte aus der ersten Tabelle (T1) mithilfe mindestens einer kategorischen Koordinate (N) auszuwählen und die Kennungen (ID) der ausgewählten Messdatenpunkte bereitzustellen,
- eine Abrufeinheit (106), die dazu konfiguriert ist, die Pixel-Identifikationsnummer (PID) und die Kachel-Identifikationsnummer (TID) mithilfe der Kennung (ID) jedes ausgewählten Messdatenpunkts und mithilfe einer gegebenen Zoom-Stufe (z) aus der zweiten Tabelle (T2) abzurufen,
- eine Recheneinheit (107), die dazu konfiguriert ist, eine Heatmap aus den ausgewählten Messdatenpunkten unter Verwendung der Pixel-Identifikationsnummern (PID) davon zu berechnen,
- eine Anzeigeeinheit (108), die dazu konfiguriert ist, die mithilfe der erhaltenen Kachel-Identifikationsnummer (TID) bestimmte mindestens eine Kartenkachel und die Heatmap gemeinsam anzuzeigen.

11. Vorrichtung nach den Ansprüchen 9 und 10, umfassend ein Mittel zur Durchführung des Verfahrens nach den Ansprüchen 2 bis 4 und 6 bis 8.

12. Vorrichtung nach einem der Ansprüche 9 bis 11, umfassend eine Datenbank, die dazu konfiguriert ist, die erste Tabelle (T1) und/oder die zweite Tabelle (T2) zu speichern.

13. Computerprogrammprodukt, das direkt in den internen Speicher eines digitalen Computers ladbar ist, umfassend Softwarecodeabschnitte zum Durchführen der Schritte eines der Ansprüche 1 bis 8, wenn das Produkt auf einem Computer ausgeführt wird.

## Revendications

1. Procédé de traitement assisté par ordinateur d'informations de position de données de mesure, comprenant les étapes suivantes :
- la fourniture (S1) de données de mesure dans une première table (T1) au moyen d'une unité d'entrée, grâce à quoi la première table (T1) comprend des coordonnées de données de mesure (x,y), qui sont définies dans un système de coordonnées bidimensionnelles, et un identifiant (ID) pour chaque point de données de mesure,
- la fourniture (S2) d'une tuile de carte bidimensionnelle d'une carte au moyen d'une unité d'entrée, grâce à quoi la tuile de carte comprend un nombre fixe de pixels qui représentent une plage de coordonnées bidimensionnelles à un niveau de zoom donné (z) et pour une projection de coordonnées donnée,
- grâce à quoi un numéro d'identification de pixel (PID) est affecté à chaque pixel de la tuile de carte, et
- grâce à quoi un numéro d'identification de tuile (TID) est affecté à la tuile de carte, et
- chaque position dans la tuile de carte est définie par des coordonnées bidimensionnelles (x,y) dans le système de coordonnées bidimensionnelles, ainsi les coordonnées bidimensionnelles sont reliées à un numéro d'identification de pixel (PID),
- la détermination (S3) des numéros d'identification de pixel (PID) correspondant aux coordonnées de données de mesure (x,y) qui se situent à l'intérieur de la plage de coordonnées bidimensionnelles de la tuile de carte au moyen d'une unité de détermination,
- la conservation en mémoire (S4) de l'identifiant (ID), du numéro d'identification de pixel (PID), du numéro d'identification de tuile (TID) et du niveau de zoom donné (z) pour chacun des points de données de mesure, qui se situent à l'intérieur de la plage de coordonnées bidimensionnelles de la tuile de carte, dans une deuxième table (T2) au moyen d'une unité d'espace mémoire, et
- la localisation d'une position d'un point de données de mesure sur la tuile de carte au moyen d'une unité de localisation qui récupère (S5) le numéro d'identification de pixel (PID) à partir de la deuxième table (T2).

2. Procédé selon la revendication 1, grâce à quoi les étapes de procédé sont exécutées pour chaque niveau de zoom (z) et pour chaque tuile de carte de la carte.

3. Procédé selon l'une quelconque des revendications précédentes, grâce à quoi la première table (T1) comprend au moins une coordonnée catégorielle (N) pour chacun des points de données de mesure, grâce à quoi une coordonnée catégorielle (N) est fournie par l'affectation d'une valeur d'une catégorie prédéfinie à chaque point de données.

4. Procédé selon l'une quelconque des revendications précédentes, grâce à quoi la deuxième table (T2) est précalculée pour chaque tuile de carte d'un niveau de zoom donné (z) et pour une projection de coordonnées donnée.

5. Procédé selon l'une quelconque des revendications précédentes, grâce à quoi le procédé comprend les étapes suivantes :
- la sélection (S6) de points de données de mesure à partir de la première table (T1) au moyen d'au moins une coordonnée catégorielle (N) et la fourniture des identifiants (ID) des points de données de mesure sélectionnés,
- la récupération (S7) du numéro d'identification de pixel (PID) et du numéro d'identification de tuile (TID) à partir de la deuxième table (T2) au moyen de l'identifiant (ID) de chaque point de données de mesure sélectionné et d'un niveau de zoom donné (z),
- le calcul (S8) d'une carte de densité à partir des points de données de mesure sélectionnés au moyen des numéros d'identification de pixel (PID) de ceux-ci, et
- l'affichage conjoint (S9) de la au moins une tuile de carte, déterminée au moyen du numéro d'identification de tuile (TID) obtenu, et de la carte de densité.

6. Procédé selon l'une quelconque des revendications précédentes, grâce à quoi au moins une deuxième table (T2) est obtenue pour chaque niveau de zoom donné (z).

7. Procédé selon la revendication 5, grâce à quoi la tuile de carte et la carte de densité sont affichées conjointement lorsque la sélection de points de données de mesure et/ou de la tuile de carte est modifiée.

8. Procédé selon l'une quelconque des revendications précédentes, grâce à quoi la deuxième table (T2) comprend en outre des entrées copiées à partir de la première table (T1).

9. Appareil de traitement assisté par ordinateur d'informations de position de données de mesure, comprenant :
- une unité d'entrée (101) configurée de façon à fournir des données de mesure dans une première table (T1) comprenant des coordonnées de données de mesure (x,y), qui sont définies dans un système de coordonnées bidimensionnelles, et un identifiant (ID) pour chaque point de données de mesure, et à fournir une tuile de carte bidimensionnelle d'une carte comprenant un nombre fixe de pixels qui représentent une plage de coordonnées bidimensionnelles à un niveau de zoom donné (z) et pour une projection de coordonnées donnée,
- grâce à quoi un numéro d'identification de pixel (PID) est affecté à chaque pixel de la tuile de carte, et
- grâce à quoi un numéro d'identification de tuile (TID) est affecté à la tuile de carte, et
- chaque position dans la tuile de carte est définie par des coordonnées bidimensionnelles dans le système de coordonnées bidimensionnelles, ainsi les coordonnées bidimensionnelles sont reliées à un numéro d'identification de pixel (PID),
- une unité de détermination (102) configurée de façon à déterminer les numéros d'identification de pixel (PID) correspondant aux coordonnées de données de mesure (x,y) qui se situent à l'intérieur de la plage de coordonnées bidimensionnelles de la tuile de carte,
- une unité d'espace mémoire (103) configurée de façon à conserver en mémoire l'identifiant (ID), le numéro d'identification de pixel (PID), le numéro d'identification de tuile (TID) et le niveau de zoom donné (z) pour chacun des points de données de mesure, qui se situent à l'intérieur de la plage de coordonnées bidimensionnelles de la tuile de carte, dans une deuxième table (T2),
- une unité de localisation (104) configurée de façon à localiser la position d'un point de données de mesure sur la tuile de carte par la récupération (S6) du numéro d'identification de pixel (PID) à partir de la deuxième table (T2).

10. Appareil selon la revendication 9, comprenant :
- une unité de sélection (105) configurée de façon à sélectionner des points de données de mesure à partir de la première table (T1) au moyen d'au moins une coordonnée catégorielle (N) et à fournir les identifiants (ID) des points de données de mesure sélectionnés,
- une unité de récupération (106) configurée de façon à récupérer le numéro d'identification de pixel (PID) et le numéro d'identification de tuile (TID) à partir de la deuxième table (T2) au moyen de l'identifiant (ID) de chaque point de données de mesure sélectionné et au moyen d'un niveau de zoom donné (z),
- une unité de calcul (107) configurée de façon à calculer une carte de densité à partir des points de données de mesure sélectionnés au moyen des numéros d'identification de pixel (PID) de ceux-ci,
- une unité d'affichage (108) configurée de façon à afficher conjointement la au moins une tuile de carte, déterminée au moyen du numéro d'identification de tuile (TID) obtenu, et la carte de densité.

11. Appareil selon les revendications 9 et 10, comprenant un moyen d'exécution du procédé selon les revendications 2 à 4 et 6 à 8.

12. Appareil selon l'une quelconque des revendications 9 à 11 comprenant une base de données configurée de façon à conserver en mémoire la première table (T1) et/ou la deuxième table (T2).

13. Produit de programme informatique pouvant être chargé directement dans la mémoire interne d'un ordinateur numérique, comprenant des parties de code logiciel destinées à l'exécution des étapes d'une des revendications 1 à 8 lorsque ledit produit est exécuté sur un ordinateur.
